# FASCICULE DE BREVET EUROPEEN

(11) **EP 1 053 919 B1**
(45) Date de publication et mention de la délivrance du brevet: **31.08.2005**
(21) Numéro de dépôt: 00401408.0
(22) Date de dépôt: 22.05.2000
(51) Int. Cl.: B60R 25/04

(54) **Système et procédé de démarrage assisté d'un véhicule**
Verfahren und Vorrichtung zum unterstützten Anlassen des Motors eines Kraftfahrzeuges
Method and device for assisted engine start of a road motor vehicle

(30) Priorité: 21.05.1999 FR 9906498
(43) Date de publication de la demande: 22.11.2000
(73) Titulaire: Renault s.a.s., 92100 Boulogne Billancourt (FR); VALEO SECURITE HABITACLE, 94042 Creteil Cédex (FR)
(72) Inventeur: Benoit, Isabelle, 77860 Quincy-Voisins (FR); Blondel, Annie, 78530 Buc (FR); Louvel, Philippe, 92140 Clamart (FR); Morillon, Jacques, 91300 MASSY (FR)
(74) Mandataire: Davies, Owen Robert Treharne

(56) Documents cités:
- EP-A- 0 893 315
- WO-A-88/03884
- DE-A- 4 435 894
- DE-A- 19 604 206

## Description

L'invention concerne un système de démarrage et d'arrêt assisté d'un véhicule à moteur, en particulier d'un véhicule automobile à moteur à combustion interne, à essence ou Diesel. Elle concerne également un procédé de démarrage et d'arrêt du moteur mettant en oeuvre un tel système.

Un système selon le préamble de la revendication 1 est connu du document WO 88/03884.

Actuellement, l'utilisateur d'un véhicule automobile dispose d'une clef à introduire dans un commutateur rotatif de démarrage, de type "Neiman" à antivol. Les inconvénients de ce système sont dus à la position de la serrure difficile à atteindre, nécessitant un effort de manoeuvre pour débloquer la colonne de direction et l'attente que le moteur tourne pour relâcher la clef. En cas d'installation d'un dispositif de protection "anti deuxième coup", l'utilisateur doit revenir à la position initiale de la clef lorsque le moteur cale, afin de redémarrer. Un autre inconvénient provient de la possibilité de couper le moteur quelle que soit la vitesse du véhicule en train de rouler, possibilité même fortuite.

Une autre solution actuelle consiste à utiliser une clé sans partie métallique que l'on introduit dans un commutateur rotatif situé sur la planche de bord, la colonne de direction étant débloquée par un dispositif électromécanique.

Un autre système plus récent consiste en la reconnaissance d'un badge, et l'utilisation d'un bouton de démarrage situé sur le levier de vitesse. Mais ce système n'est connu que sur des véhicules à essence et équipés de boîte automatique.

Le but de l'invention est de remplacer la clef traditionnelle par un identifiant de format voisin de celui d'une carte de crédit par exemple, et le commutateur antivol rotatif par un lecteur de carte, un bouton impulsionnel et un dispositif électromécanique de verrouillage de la direction dans une version particulière. Ainsi, la fonction de démarrage assisté consiste à mettre en marche le moteur à partir d'une impulsion courte sur le bouton de démarrage, quel que soit le type de boîte de vitesse équipant le véhicule, qu'il soit essence ou Diesel.

Pour cela l'objet de l'invention est un système de démarrage assisté d'un véhicule dont le moteur est piloté par une unité de contrôle reliée à un démarreur, le système comportant:
- un badge porté par l'utilisateur du véhicule et contenant un identifiant codé d'autorisation du démarrage ;
- un lecteur de badge destiné à identifier le badge ;
- des capteurs détectant des conditions de sécurité nécessaires au démarrage ;
- un capteur d'information sur la vitesse du véhicule,
caractérisé en ce que le système comporte en outre
- un bouton impulsionnel de mise en marche et d'arrêt du moteur ;
- une unité centrale d'habitacle, d'une part reliée au lecteur de badge et au bouton impulsionnel et d'autre part assurant la distribution de l'alimentation électrique au moyen d'un relais après contact vers l'unité de contrôle moteur notamment, au moyen d'un relais de servitude pour différents éléments de l'habitacle et au moyen d'un relais de commande du démarreur, qui reçoit une information sur l'état du moteur tournant ou arrêté par l'unité de contrôle moteur ;
et en ce que, dans le cas où le conducteur appuie sur le bouton pour arrêter le moteur, l'unité de contrôle habitacle compare la vitesse du véhicule, délivrée par le capteur de vitesse ou un système d'anti-blocage des roues, à un seuil prédéterminé et si la vitesse est supérieure au seuil, l'appui sur le bouton est sans effet, le moteur continuant à tourner.

Un autre objet de l'invention est un procédé de fonctionnement d'un système de démarrage assisté d'un véhicule caractérisé en ce que :
- après détection du badge détenu par le conducteur, le démarrage du moteur est autorisé si l'identifiant codé dans le badge est authentifié et si les conditions de sécurité délivrées par les capteurs sont remplies, le témoin d'invitation à démarrer du bouton impulsionnel étant alors allumé ;
- si le conducteur appuie sur ledit bouton, l'unité centrale de contrôle de l'habitacle active le relais de commande du démarreur jusqu'à ce que l'unité centrale de contrôle moteur lui donne information que le moteur tourne de façon autonome, ce qui allume le témoin "moteur tournant" du bouton ;
- lorsque le conducteur veut l'arrêt du moteur, il appuie à nouveau sur le bouton et l'unité centrale de contrôle de l'habitacle coupe le relais de commande de alimentation électrique si la vitesse du véhicule est inférieure à un seuil Vₛ prédéfini ;
- un nouvel appui sur le bouton sans retrait du badge relance la séquence de démarrage.

D'autres caractéristiques et avantages de l'invention apparaîtront à la lecture de la description d'un exemple de réalisation, illustrée par les figures suivantes qui sont:
- la figure 1 : un schéma fonctionnel d'un système de démarrage assisté de véhicule, selon l'invention ;
- la figure 2 : un diagramme de déroulement du procédé de démarrage assisté selon l'invention ;
- la figure 3 : un chronogramme des états pour un cycle de fonctionnement normal du procédé selon l'invention ;
- la figure 4 : un chronogramme des états pour un cycle de fonctionnement normal du procédé selon l'invention avec arrêt du moteur et redémarrage sans enlever le badge de l'utilisateur ;
- la figure 5 : un chronogramme des états illustrant un calage du moteur.

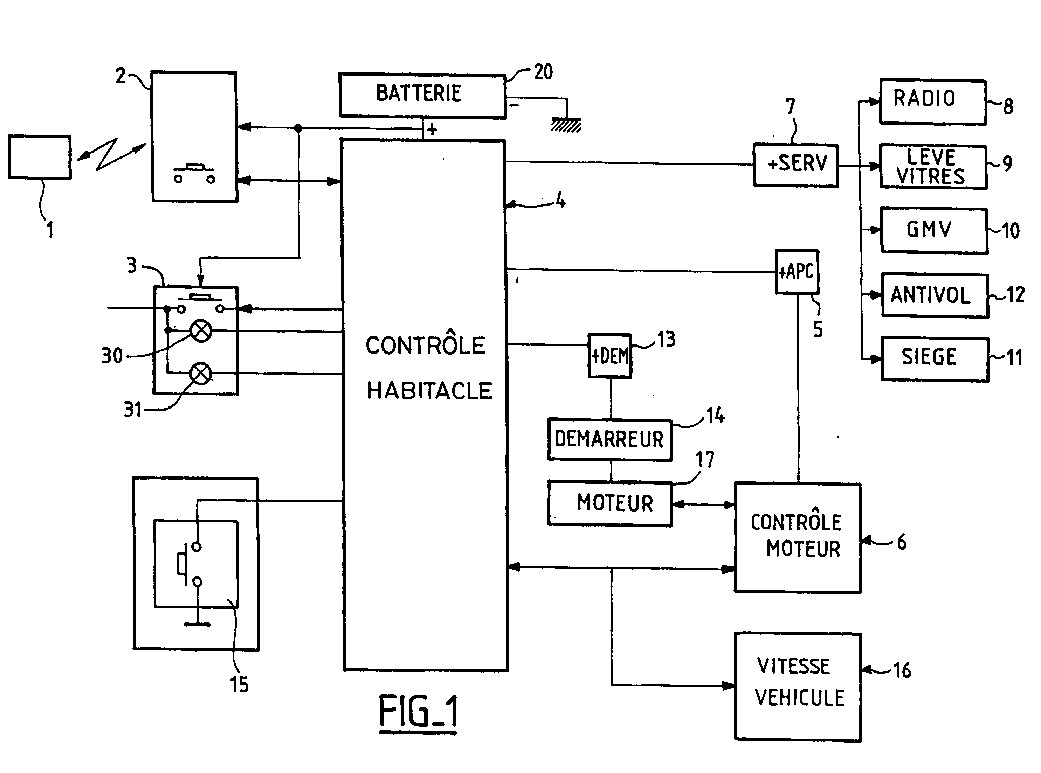

Comme le montre le schéma fonctionnel de la figure 1, le système de démarrage assisté selon l'invention comprend un badge 1 ou carte, détenu par l'utilisateur du véhicule et contenant une fonction d'identification codée, de type transpondeur crypté par exemple. Ce badge 1 peut être doté d'un émetteur à radiofréquence pour le verrouillage et le déverrouillage des portes. Il est associé à un lecteur 2 de badge, destiné à l'identifier et situé par exemple sur la planche de bord du véhicule. Il contient l'équivalent de l'antenne transpondeur, avec une lecture de l'identifiant sans contact. Lorsque le badge 1 a une télécommande d'ouverture des portes par un émetteur radio-fréquence, le lecteur va lui contenir un récepteur radio-fréquence. Il est alimenté à partir de la tension de la batterie 20, par exemple avec 12 volts en permanence. Dans un premier mode de réalisation, le badge est introduit dans le lecteur et dans une autre version, il est simplement porté par l'utilisateur en face du lecteur.

Le bouton impulsionnel 3 de mise en marche et d'arrêt du moteur est par exemple situé sur la planche de bord, directement accessible par le conducteur. Il est alimenté par la tension électrique de la batterie 20 sous 12 volts permanents. Il est relié, comme le lecteur 2 de badge à une unité centrale 4 de contrôle de l'habitacle assurant la distribution de l'alimentation électrique au moyen de trois relais :
- un relais 5 de commande du circuit d'alimentation électrique du moteur, dit relais après contact "+APC" alimentant l'unité 6 de contrôle du moteur, l'air-bag, le tableau de bord entre autres ;
- un deuxième relais 7 de servitude "+SERV", pour l'alimentation notamment de la radio 8, des lève-vitres 9, du groupe moto-ventilateur 10 GMV de l'habitacle, du siège électrique 11, etc. Il alimente également l'antivol électrique 12 pouvant être installé ;
- un troisième relais 13 de démarrage "+DEM" pour l'alimentation du solénoïde du démarreur 14 du moteur 17. L'unité 6 de contrôle moteur communique à l'unité 4 de contrôle de l'habitacle une information sur l'état du moteur tournant ou arrêté.

Le bouton impulsionnel 3, sur lequel le conducteur doit appuyer pour démarrer et arrêter le moteur, est équipé de deux témoins lumineux ; le témoin 30 considéré comme principal est une invitation à démarrer, il indique la position du bouton et signale qu'il est autorisé à mettre en route le moteur car les conditions de sécurité requises sont présentes. Le second témoin lumineux 31, dit secondaire, est allumé lorsque le moteur tourne et a deux fonctions, l'une étant d'indiquer au conducteur que le moteur tourne et l'autre servant à localiser le bouton pour arrêter le moteur. Pour cela, l'éclairage du témoin secondaire doit être visible le jour, même par fort ensoleillement, mais atténué de façon notable lorsqu'il fait nuit et que les feux de position sont allumés.

Le système de démarrage assisté comporte de plus un ensemble de plusieurs capteurs 15 de détection des conditions de sécurité nécessaires au démarrage du moteur. Ces capteurs sont notamment un capteur de point mort et un capteur de position de la pédale d'embrayage dans le cas d'une boîte de vitesse mécanique, et dans le cas d'une boîte de vitesse automatique, c'est un capteur de position du levier de vitesse qui doit être sur la position "Parking" ou sur la position "Neutre". Dans ce deuxième cas, si le moteur est de type Diesel, il faut ajouter une condition sur le préchauffage qui doit être fini pour autoriser le démarrage.

Enfin, le système comporte un capteur 16 de vitesse du véhicule, cette information pouvant aussi être délivrée par le calculateur du système d'anti-blocage de roues ABS.

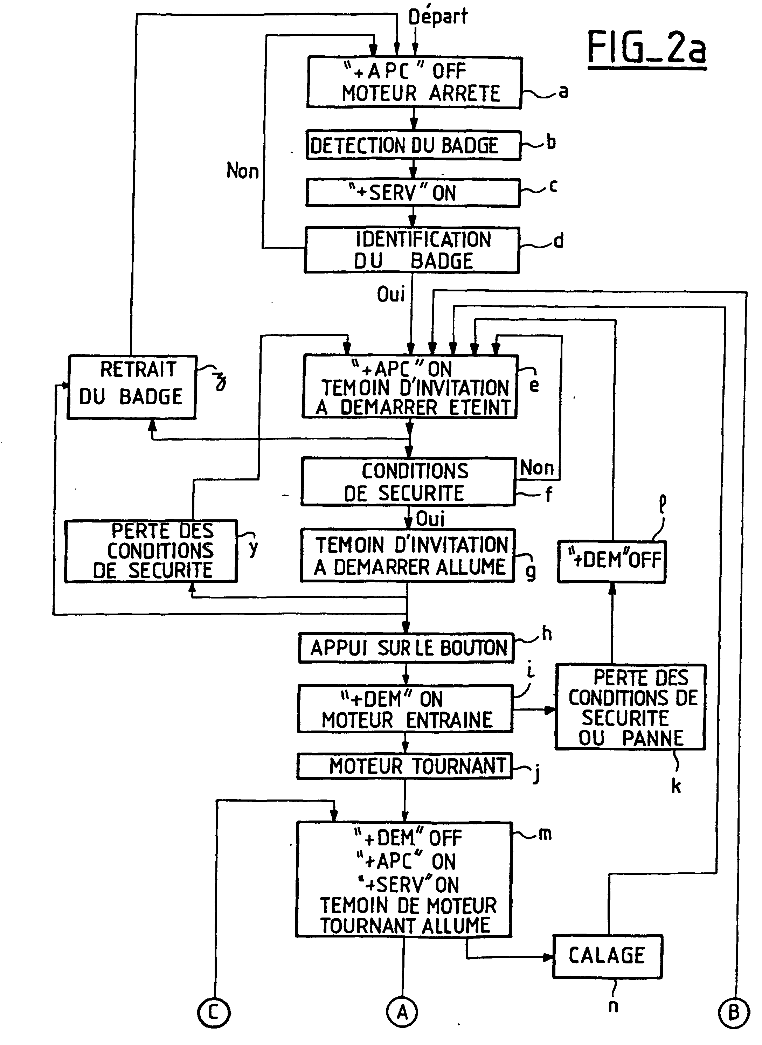

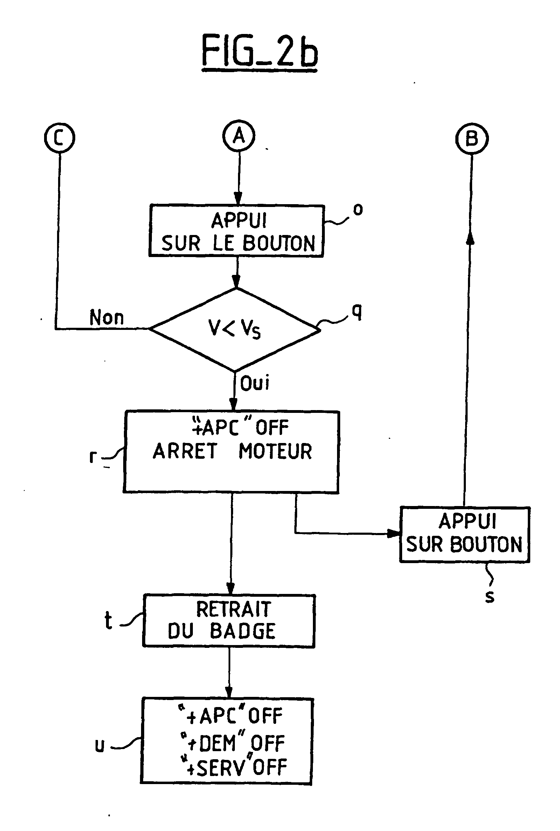

Le procédé de démarrage assisté d'un véhicule mettant en oeuvre le système précédemment décrit se déroule selon les séquences suivantes, décrites à l'aide de la figure 2.

Lorsque l'utilisateur du véhicule est entré dans l'habitacle, alors que la mise sous contact électrique du véhicule n'est pas faite, le relais "+ APC" étant désactivé et que le moteur est arrêté (étape a), il présente son badge 1, en face du lecteur 2 qui doit le détecter (étape b). Il peut aussi introduire son badge dans un réceptacle prévu à cet effet sur la planche de bord et contenant le lecteur de badge. Dès que le badge est détecté, le relais 7 de servitude "+ SERV" est activé, permettant ainsi de régler la position du siège électrique, d'ouvrir les vitres ou d'écouter la radio notamment (étape c). Ce relais est coupé ensuite pendant la phase de démarrage et désactivé lors du retrait de la carte.

A l'étape d, l'unité centrale 4 de contrôle de l'habitacle, via le lecteur, cherche à authentifier l'identifiant codé dans la carte pour autoriser le déblocage électrique de la colonne de direction du véhicule et le mettre sous alimentation électrique, le relais 5 "+ APC" basculant à l'état ON (étape e). Le témoin lumineux principal d'invitation à démarrer reste encore éteint et le moteur est à l'arrêt.

Si le lecteur n'a pas reconnu le badge à l'étape d, le procédé revient à l'étape a.

Si, après l'étape e, le conducteur retire son badge à l'étape z, le procédé retourne aussi à l'étape a.

A l'étape suivante f, le procédé vérifie l'ensemble des conditions de sécurité avant d'autoriser le démarrage du moteur. Ces conditions sont par exemple :
- aucune vitesse n'est enclenchée, donc le levier de la boîte de vitesse mécanique est au point mort, OU la pédale d'embrayage est enfoncée, et celui de la boîte automatique est en position "Parking" ou "neutre" ; ET
- la colonne de direction est débloquée, ET
- le préchauffage du moteur est terminé dans le cas d'un moteur alimenté en Diesel.

Lorsque les capteurs respectifs ont détecté que ces conditions étaient remplies, l'unité centrale 4 d'habitacle autorise le démarrage du moteur, par l'allumage du témoin lumineux principal du bouton impulsionnel 3, les relais de servitude "+SERV" et d'alimentation électrique "+APC" étant activés et le moteur étant toujours arrêté (étape g).

Si les conditions de sécurité ne sont pas toutes remplies, le procédé retourne à l'étape e de mise sous tension.

A partir de cette étape g d'invitation à démarrer, le conducteur peut appuyer sur le bouton impulsionnel 3. Dès que le bouton a reçu un tel appui, étape h, la séquence de démarrage est lancée.

Par contre, si à une étape y, les conditions de sécurité ne sont plus remplies, le procédé retourne encore à l'étape e, et si à une étape z, le conducteur retire le badge, il retourne à l'étape a.

A l'étape i, le calculateur 4 de contrôle de l'habitacle commande le relais 13 de démarrage, qui passe à l'état ON pour entraîner le moteur jusqu'à l'instant où le calculateur 6 de contrôle moteur donne l'information "moteur tournant autonome".

Le témoin lumineux secondaire du bouton impulsionnel 3 est alors allumé, signalant que le moteur tourne (étape j).

Si le calculateur de contrôle de l'habitacle 4 détecte une perte des conditions de sécurité ou une panne de moteur, celui-ci ne tournant pas de façon autonome après une temporisation fixée, à l'étape k, alors il coupe le relais de démarrage à l'étape l et le procédé revient à l'étape e.

Après l'étape j de reconnaissance du moteur tournant, l'unité centrale 4 de contrôle de l'habitacle coupe le relais 13 de démarrage ("+DEM" sur OFF) tout en laissant le relais 5 d'après contact "+ APC" et le relais 7 de servitude "+SERV" activés (étape m), le véhicule est en état de rouler.

Deux cas peuvent alors se présenter : dans un premier cas, le conducteur peut décider d'arrêter le moteur en appuyant sur le bouton impulsionnel 3 (étape o), et dans un deuxième cas, le moteur peut caler (étape n). Dans le premier cas, le procédé considère la vitesse du véhicule et la compare à un seuil.

Dans le premier cas où le conducteur appuie le bouton 3 pour arrêter le moteur (étape o), l'unité 4 de contrôle habitacle compare la vitesse V du véhicule, délivrée par un capteur de vitesse ou le système d'anti-blocage des roues ABS, à un seuil Vₛ prédéterminé (étape q). Si la vitesse V est supérieure au seuil, l'appui sur le bouton est sans effet et le procédé revient à l'étape m, le moteur continuant à tourner.

Par contre, si la vitesse V est inférieure au seuil Vₛ, le calculateur 4 de contrôle de l'habitacle coupe l'alimentation électrique par désactivation du relais 5 "+APC" qui retourne à l'état OFF, ce qui arrête le moteur. A cette étape r, le témoin lumineux secondaire "moteur tournant" est alors éteint.

Si le conducteur appuie à nouveau sur le bouton impulsionnel 3 (étape s), le procédé revient à l'étape e.

Si à l'étape t, le conducteur enlève son badge du lecteur ou de l'environnement du lecteur dans la variante de réalisation dans laquelle le badge est reconnu à une certaine distance par le lecteur, le relais 7 de servitude "+SERV" est désactivé par le calculateur 4 de contrôle habitacle (étape u) qui, de plus, déclenche le verrouillage de la colonne de direction s'il est présent dans la variante de réalisation du système.

Lorsque le moteur du véhicule a calé, le calculateur 6 de contrôle moteur envoie l'information "moteur calé" au calculateur 4 habitacle, qui retourne à l'étape e, éteint le témoin lumineux secondaire du bouton impulsionnel 3 et rallume l'autre témoin lumineux d'invitation à démarrer (étape g) si les conditions de sécurité sont bien présentes à l'étape f suivante. Pour redémarrer, le conducteur peut appuyer à nouveau sur le bouton 3 à l'étape g. Par contre, si le conducteur retire le badge à l'étape z suivant l'étape g, l'autorisation de démarrer n'est plus donnée et le procédé retourne à l'étape a de départ.

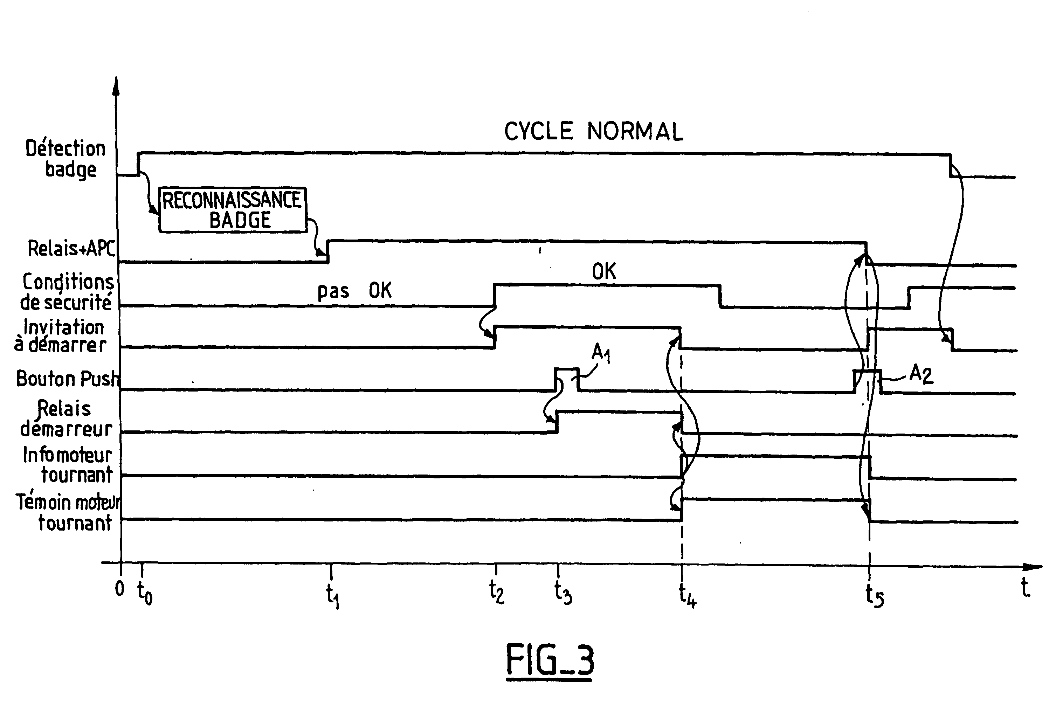

La figure 3 est un chronogramme des états des différents éléments du système de démarrage assisté selon l'invention, pour un cycle de fonctionnement normal du procédé. La première ligne, en haut du chronogramme, représente l'information de détection du badge 1 par le lecteur 2, qui passe de 0 à 1 quand le lecteur a bien détecté la présence d'un badge à l'instant t₀. La deuxième ligne représente l'état du relais 5 de commande de l'alimentation électrique "+APC" qui passe de 0 à 1 quand il est activé à t₁. La troisième ligne concerne l'information sur les conditions de sécurité délivrée par les capteurs, cette information étant au niveau haut 1 quand les conditions sont remplies à t₂. La quatrième ligne concerne l'état du témoin lumineux d'invitation à démarrer qui est à 1 quand il est allumé. La cinquième ligne représente les appuis sur le bouton impulsionnel 3, quand le signal passe de 0 à 1, à t₃. Le premier appui A₁ lance le démarrage du moteur et le deuxième appui A₂ à t₅ arrête le moteur en coupant l'alimentation électrique par le relais "+APC" dont l'état passe de 1 à 0.

Le relais 13 de démarrage passe de l'état 0 à l'état 1 quand il est activé, à la sixième ligne. L'information délivrée par le calculateur de contrôle moteur 6 sur le moteur est égale à 1 quand le moteur tourne à l'instant t₄, à la septième ligne, et le témoin lumineux du bouton 3 informant le conducteur de cet état du moteur est aussi à 1 quand il est allumé, à la huitième ligne.

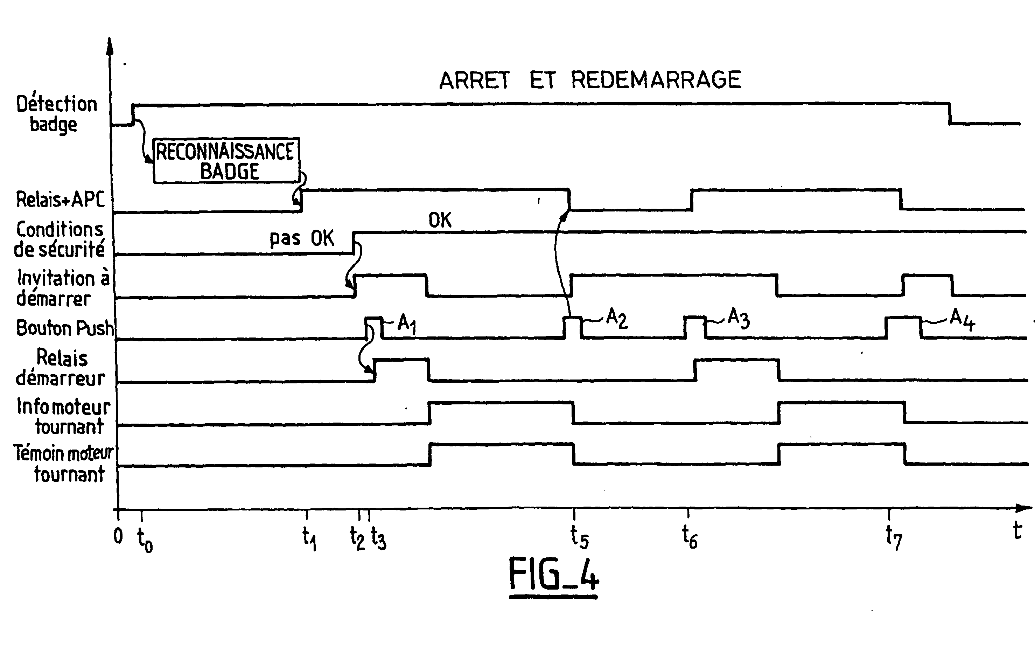

Le chronogramme de la figure 4 représente les différents états des éléments constituant le système de démarrage assisté dans le cas d'un arrêt volontaire du moteur par le conducteur, suivi d'une commande de redémarrage sans retrait du badge du lecteur.

Les lignes du chronogramme représentent les mêmes éléments que celles de la figure 3. Le premier appui A₁ sur le bouton impulsionnel 3 à t₃ lance le démarrage du moteur, le deuxième appui A₂ commande son arrêt et le troisième appui A₃ à t₆ relance son démarrage. Un quatrième appui A₄ arrête à nouveau le moteur à t₇.

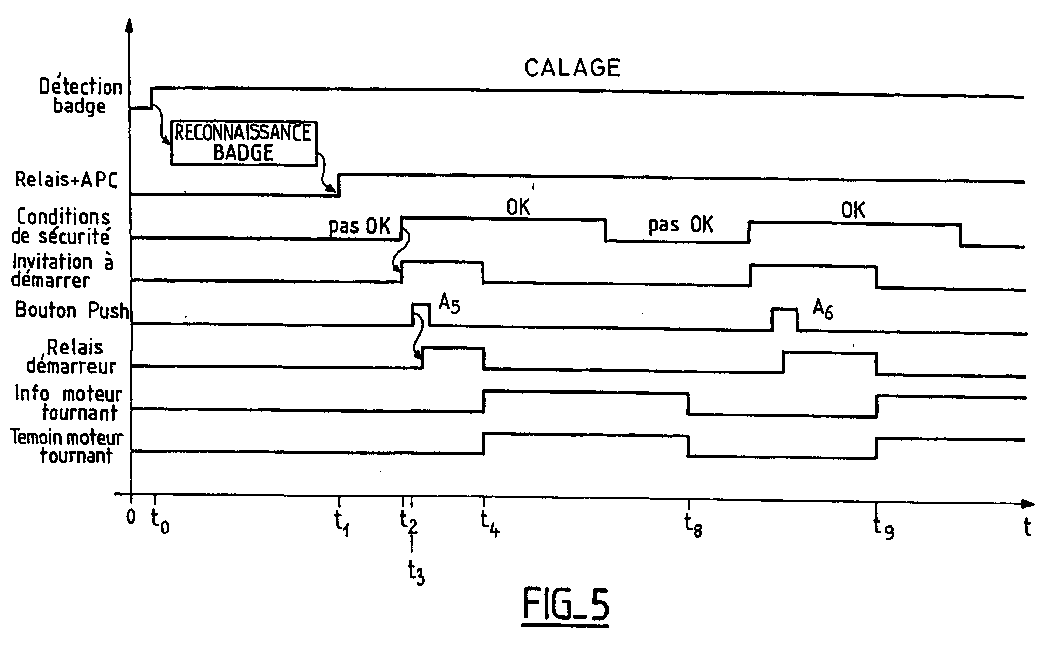

Le cas de calage du moteur est représenté sur la septième ligne du troisième chronogramme de la figure 5, où le calculateur 6 de contrôle moteur délivre une information sur le moteur tournant passant de l'état 1 à l'état bas 0 à t₈, ce qui éteint le témoin lumineux secondaire, son état passant alors de 1 à 0 sur la huitième ligne. Après un premier appui A₁ du bouton impulsionnel 3 par le conducteur pour déclencher le démarrage du moteur, le conducteur appuie une deuxième fois, A₆, après le calage du moteur à t₉ pour le mettre à nouveau en route à t₉.

A l'instant t₈ du calage, le moteur ne tourne plus, mais une vitesse est engagée de sorte que les conditions de sécurité ne sont plus remplies pour autoriser un nouveau démarrage. Lorsque la boite de vitesse est revenue au point mort ou neutre, il suffit d'appuyer une fois sur le bouton pour redémarrer, alors qu'avec une clef il faut remettre le commutateur rotatif à 0.

Dans le cas d'un moteur Diesel, une des conditions de sécurité exige que le préchauffage du moteur soit terminé. C'est pourquoi il est intéressant que l'unité centrale 4 d'habitacle ait une fonction de mémorisation de la demande de démarrage par appui sur le bouton impulsionnel, pendant le préchauffage, mais avec une temporisation au-delà de laquelle la mémorisation de l'appui est annulée.

Concernant le badge d'identification du conducteur, selon une variante de réalisation du système, il peut être bloqué dans le lecteur dès que le moteur tourne. Il est débloqué sous deux conditions : lorsque le moteur est arrêté et que la vitesse du véhicule est inférieure à un seuil. Dans certaines versions de réalisation du système avec une boîte de vitesse automatique, une condition supplémentaire peut porter sur la position "Parking" du levier de vitesse. Le blocage et le déblocage du badge sont commandés par l'unité centrale 4 de l'habitacle, qui envoie ses messages de commande vers le lecteur du badge qui les exécute.

Il est possible de plus de concevoir un avertissement sonore indiquant au conducteur que son badge est resté dans le lecteur alors qu'il s'apprête à quitter son véhicule, au moment où il ouvre sa portière par exemple.

Chaque carte ou badge possède un numéro d'identification unique, qui est communiqué au calculateur 4 d'habitacle lors de l'authentification par transpondeur. Un avantage intéressant réside dans la reconnaissance de la carte utilisée par le calculateur d'habitacle, qui commande par exemple les équipements suivants, tels que le siège dont la position est mémorisée, la climatisation automatique et même les stations de radio préférées.

Le calculateur d'habitacle peut enregistrer plusieurs numéros d'identification, suivant les différents utilisateurs du véhicule.

Selon une variante de réalisation, l'unité centrale 4 d'habitacle a une fonction de mémorisation de la demande de démarrage effectuée par un appui sur le bouton impulsionnel 3. La prise en compte de cette mémorisation est matérialisée par le clignotement du témoin lumineux "invitation à démarrer" du bouton impulsionnel. La mémorisation de l'appui est annulée après une temporisation fixée, si les conditions impulsionnelles de sécurité ne sont pas effectivement remplies, telles que la position du levier de la boîte de vitesse et les conditions de préchauffage dans le cas d'un moteur Diesel où cette mémorisation est particulièrement intéressante. Il est important de choisir qu'un nouvel appui sur le bouton impulsionnel, pendant que la mémorisation est active, n'annule pas cette mémorisation en cours.

Dans une autre variante de l'invention, le véhicule est équipé d'un dispositif de blocage de la colonne de direction, de type électromécanique appelé "antivol électrique". Il reçoit des commandes en provenance du calculateur d'habitacle 4, en tenant compte des informations délivrées par le système d'antiblocage des roues ABS sur la vitesse du véhicule et par l'Airbag sur un éventuel accident.

Le calculateur d'habitacle commande le déverrouillage de l'antivol électrique après l'authentification de la carte, et commande son verrouillage lorsque le lecteur détecte l'absence de la carte alors que le moteur est arrêté.

## Revendications

1. Système de démarrage assisté d'un véhicule dont le moteur est piloté par une unité de contrôle, reliée à un démarreur et à un capteur de vitesse du véhicule, le système comportant:
- un badge (1), porté par le conducteur du véhicule, et contenant une fonction d'identification codée d'autorisation du démarrage ;
- un lecteur (2) de badge destiné à identifier ledit badge (1) ;
- des capteurs (15) détectant des conditions de sécurité nécessaires au démarrage;
- un capteur (16) d'informations sur la vitesse du véhicule,
**caractérisé en ce que** le systeme comporte en outre
- un bouton impulsionnel (3) de mise en marche et d'arrêt du moteur, directement accessible par le conducteur ;
- une unité centrale (4) de contrôle de l'habitacle, d'une part reliée au lecteur (2) de badge et au bouton impulsionnel (3) et d'autre part, assurant la distribution de l'alimentation électrique au moyen d'un relais (5) après contact vers l'unité (6) de contrôle moteur notamment et d'un relais (13) de commande du démarreur (14) du moteur, qui reçoit une information sur l'état du moteur arrêté ou tournant par l'unité (6) de contrôle moteur ;
et **en ce que**, dans le cas où le conducteur appuie sur le bouton (3) pour arrêter le moteur (étape o), l'unité (4) de contrôle habitacle compare la vitesse (V) du véhicule, délivrée par le capteur de vitesse ou un système d'anti-blocage des roues (ABS), à un seuil (Vₛ) prédéterminé (étape q) et si la vitesse (V) est supérieure au seuil, l'appui sur le bouton est sans effet, le moteur continuant à tourner.

2. Système de démarrage assisté selon la revendication 1, **caractérisé en ce que** le bouton impulsionnel (3) est alimenté par la tension électrique de la batterie (20) du véhicule et est équipé de deux témoins lumineux :
- un premier témoin principal (30), qui est une invitation à démarrer pour le conducteur à qui il indique la position du bouton et à qui il signale qu'il est autorisé à mettre en route le moteur, les conditions de sécurité requises étant remplies ;
- un second témoin (31), qui est allumé quand le moteur tourne et qui indique au conducteur la localisation du bouton pour arrêter le moteur.

3. Système de démarrage assisté selon l'une des revendications 1 à 2, **caractérisé en ce que** le badge (1) d'identification du conducteur autorisé à faire démarrer le véhicule contient des moyens codés d'autorisation du démarrage de type transpondeur crypté.

4. Système de démarrage assisté selon l'une des revendications 1 à 3, **caractérisé en ce que** le lecteur (2) de badge est situé sur la planche de bord du véhicule, est alimenté par la tension électrique de la batterie (20) et contient l'équivalent de l'antenne transpondeur, avec une lecture de l'identifiant sans contact.

5. Système de démarrage assisté selon l'une des revendications 1 à 4, **caractérisé en ce que** l'unité centrale (4) de contrôle de l'habitacle est également reliée à un relais (7) de service pour l'alimentation électrique de la radio (8), des lève-vitres (9), du groupe motoventilateur (10) GMV de l'habitacle, du siège électrique (11).

6. Système de démarrage assisté selon l'une des revendications 1 à 5, **caractérisé en ce que** le véhicule étant équipé d'un dispositif antivol électrique, il est commandé par l'unité centrale (4) de contrôle de l'habitacle, par l'intermédiaire du relais (7) de service.

7. Système de démarrage assisté selon l'une des revendications 1 à 6, **caractérisé en ce que** les capteurs (15), détectant si les conditions de sécurité nécessaires au démarrage sont remplies, sont notamment des capteurs de position du levier de la boîte de vitesse, de pédale d'embrayage, du frein de parking, un capteur sur la colonne de direction et un capteur de préchauffage dans le cas d'un moteur Diesel.

8. Système de démarrage assisté selon l'une des revendications 1 à 7, **caractérisé en ce que** le capteur (16) délivrant une information sur la vitesse de déplacement du véhicule est intégré au système d'antiblocage de roues ABS, quand le véhicule en est équipé.

9. Procédé de fonctionnement d'un système de démarrage assisté d'un véhicule selon l'une des revendications 1 à 8, **caractérisé en ce que** :
- après détection du badge (1) détenu par la conducteur, le démarrage du moteur est autorisé si l'identifiant codé dans le badge est authentifié et si les conditions de sécurité requises délivrées par les capteurs (15) sont remplies, le témoin (30) d'invitation à démarrer du bouton impulsionnel (3) étant alors allumé ;
- si le conducteur appuie sur ledit bouton (3), l'unité centrale (4) de contrôle de habitacle active le relais (13) de commande du démarreur (14) jusqu'à ce que l'unité (6) de contrôle moteur lui donne l'information que le moteur tourne de façon autonome, ce qui allume le témoin (31) "moteur tournant" du bouton (3);
- lorsque le conducteur veut l'arrêt du moteur, il appuie à nouveau sur le bouton (3) et l'unité centrale (4) de contrôle de l'habitacle coupe le relais (5) de commande de l'alimentation électrique si la vitesse du véhicule est inférieure à un seuil (Vₛ) prédéfini ;
- un nouvel appui sur le bouton (3) sans retrait de la carte (1) relance la séquence de démarrage.

10. Procédé de démarrage assisté selon la revendication 9, **caractérisé en ce que**, en cas de calage du moteur, l'unité (6) de contrôle moteur envoie l'information "moteur calé" à l'unité centrale (4) de contrôle de l'habitacle, qui éteint le témoin lumineux secondaire (31) du bouton impulsionnel (3) et allume le témoin (30) d'invitation à démarrer si les conditions de sécurité requises sont remplies, et **en ce que** le conducteur, sans retirer son badge (1), appuie à nouveau sur le bouton (3) pour redémarrer le moteur du véhicule.

11. Procédé de démarrage assisté selon l'une des revendications 9 ou 10, **caractérisé en ce que** tout retrait du badge (1) de l'environnement du lecteur (2), lorsque le moteur du véhicule est arrêté, annule l'autorisation de démarrage du moteur.

12. Procédé de démarrage assisté selon l'une des revendications 9 ou 10, **caractérisé en ce que** tout retrait du badge (1) de l'environnement du lecteur (2), alors que le moteur tourne de façon autonome, est sans effet sur le fonctionnement du moteur.

13. Procédé de démarrage assisté selon l'une des revendications 9 ou 10, **caractérisé en ce que** dans le cas où le badge (1) du conducteur doit être introduit dans le lecteur (2) pour être détecté, le badge est bloqué dans le lecteur dès que le moteur tourne et est débloqué à condition que le moteur soit arrêté et que la vitesse du véhicule soit inférieure à un seuil, le bloquage et le débloquage du badge carte étant commandés par l'unité centrale (4) de contrôle de l'habitacle et exécutés par le lecteur (2).

14. Procédé de démarrage assisté selon la revendication 13, **caractérisé en ce qu'**il comporte de plus un moyen d'avertissement sonore indiquant au conducteur que le badge (1) est resté dans le lecteur (2), alors qu'il quitte son véhicule.

15. Procédé de démarrage assisté selon l'une des revendications 9 ou 10, **caractérisé en ce que** l'unité centrale (4) de contrôle de l'habitacle a une fonction de mémorisation de la demande de démarrage effectuée par un appui du conducteur sur le bouton impulsionnel (3), cette mémorisation étant d'une part annulée après une temporisation fixée si les conditions impulsionnelles de sécurité requises ne sont pas remplies mais étant d'autre part maintenue lors d'un second nouvel appui sur le bouton.

16. Procédé de démarrage assisté selon l'une des revendications 9 à 15, **caractérisé en ce que**, le véhicule étant équipé d'un dispositif électro-magnétique de blocage de la colonne de direction, l'unité centrale (4) de contrôle de l'habitacle commande son déverrouillage après l'authentification du badge (1) d'identification du conducteur et commande son verrouillage quand le lecteur (2) de badge détecte l'absence de badge, le moteur étant à l'arrêt.

## Patentansprüche

1. System zum unterstützten Anlassen eines Fahrzeuges, dessen Motor durch eine Steuereinheit gesteuert wird, die mit einem Anlasser und einem Geschwindigkeitssensor des Fahrzeuges verbunden ist, wobei das System folgendes umfasst:
- eine von dem Fahrer des Fahrzeuges getragene und eine kodierte Identifikationsfunktion für die Erlaubnis zum Anlassen enthaltende Karte (1);
- einen Kartenleser (2), der dazu bestimmt ist, die Karte (1) zu identifizieren;
- Sensoren (15), die für das Anlassen notwendige Sicherheitsbedingungen erfassen;
- einen Sensor (16) zum Erfassen von Informationen über die Fahrzeuggeschwindigkeit,
**dadurch gekennzeichnet, dass** das System außerdem umfasst:
- einen Druckknopf (3) zum Starten und Anhalten des Motors, welcher vom Fahrer direkt erreichbar ist;
- eine Zentraleinheit (4) zur Steuerung der Fahrgastzelle, die einerseits mit dem Kartenleser (2) und dem Druckknopf (3) verbunden ist und andererseits die Verteilung der Stromversorgung mittels eines Relais (5), insbesondere nach dem Einschalten zur Motorsteuereinheit (6), und durch ein Relais (13) zur Steuerung des Anlassers (14) des Motors sicherstellt, welches eine Information über den Zustand des abgeschalteten oder laufenden Motors durch die Motorsteuereinheit (6) erhält;
und **dadurch**, dass im Falle, in welchem der Fahrer auf den Knopf (3) drückt, um den Motor anzuhalten (Schritt o), die Einheit (4) zur Fahrgastzellensteuerung die Geschwindigkeit (V) des Fahrzeuges, welche durch den Geschwindigkeitssensor oder ein Anti-Blockiersystem für die Räder (ABS) ausgegeben wird, mit einem vorgegebenen Grenzwert (Vₛ) vergleicht (Schritt q), und, wenn die Geschwindigkeit (V) größer als der Grenzwert ist, das Knopfdrücken ohne Wirkung bleibt, wobei der Motor weiterläuft.

2. System zum unterstützten Anlassen gemäß Anspruch 1, **dadurch gekennzeichnet, dass** der Druckknopf (3) von der elektrischen Spannung der Batterie (20) des Fahrzeuges versorgt wird und mit zwei Leuchtanzeigen ausgerüstet ist:
- eine erste Hauptanzeige (30), welche eine Einladung zum Anlassen an den Fahrer ist, welchem sie die Position des Knopfes angibt und welchem sie anzeigt, dass es ihm erlaubt ist, den Motor zu starten, da die erforderlichen Sicherheitsbedingungen erfüllt sind;
- eine zweite Anzeige (31), die eingeschaltet ist, wenn der Motor läuft, und dem Fahrer den Ort des Knopfes zum Anhalten des Motors angibt.

3. System zum unterstützten Anlassen gemäß einem der Ansprüche 1 bis 2, **dadurch gekennzeichnet, dass** die Karte (1) zur Identifizierung des zum Anlassen des Fahrzeuges autorisierten Fahrers kodierte Mittel zur Autorisation des Anlassens vom verschlüsselten Transponder-Typ enthält.

4. System zum unterstützten Anlassen gemäß einem der Ansprüche 1 bis 3, **dadurch gekennzeichnet, dass** der Kartenleser (2) sich auf dem Armaturenbrett des Fahrzeugs befindet, durch die elektrische Spannung der Batterie (20) versorgt wird und das Äquivalent der Transponder-Antenne enthält, mit einem berührungsfreien Lesen des Identifizierungsmittels.

5. System zum unterstützten Anlassen gemäß einem der Ansprüche 1 bis 4, **dadurch gekennzeichnet, dass** die Zentraleinheit (4) zur Steuerung der Fahrgastzelle ebenfalls mit einem Service-Relais (7) zur Stromversorgung des Radios (8), der Fensterheber (9), der Motorventilatorgruppe (10) GMV der Fahrgastzelle, des elektrischen Sitzes (11) verbunden ist.

6. System zum unterstützten Anlassen gemäß einem der Ansprüche 1 bis 5, **dadurch gekennzeichnet, dass** eine elektrische Diebstahlsicherung, mit welcher das Fahrzeug ausgerüstet ist, unter Zwischenschaltung des Service-Relais (7) durch die Zentraleinheit (4) zur Steuerung der Fahrgastzelle gesteuert wird.

7. System zum unterstützten Anlassen gemäß einem der Ansprüche 1 bis 6, **dadurch gekennzeichnet, dass** die Sensoren (15), die erfassen, ob die erforderlichen Sicherheitsbedingungen beim Anlassen erfüllt sind, insbesondere Positionssensoren zur Erfassung der Position des Schalthebels des Getriebes, des Kupplungspedals, der Handbremse, ein Sensor auf der Lenksäule und ein Vorglühsensor im Falle eines Dieselmotors sind.

8. System zum unterstützten Anlassen gemäß einem der Ansprüche 1 bis 7, **dadurch gekennzeichnet, dass** der eine Information über die Fortbewegungsgeschwindigkeit des Fahrzeuges liefernde Sensor (16) im Anti-Blockiersystem der Räder ABS integriert ist, wenn das Fahrzeug damit ausgerüstet ist.

9. Betriebsverfahren eines Systems zum unterstützen Anlassen eines Fahrzeuges gemäß einem der Ansprüche 1 bis 8, **dadurch gekennzeichnet, dass**:
- nach Erkennung der vom Fahrer getragenen Karte (1) das Anlassen des Motors erlaubt wird, wenn das in der Karte kodierte Identifizierungsmittel authentifiziert wird und wenn die erforderlichen, von den Sensoren (15) ausgegebenen Sicherheitsbedingungen erfüllt sind, wobei die Anzeige (30) zur Einladung zum Anlassen des Druckknopfes (3) dann eingeschaltet ist;
- wenn der Fahrer auf den Knopf (3) drückt, die Zentraleinheit (4) zur Steuerung der Fahrgastzelle das Relais (13) zur Steuerung des Anlassers (14) aktiviert, bis ihr die Motorsteuereinheit (6) die Information übergibt, dass der Motor selbständig läuft, was die Anzeige (31) "laufender Motor" des Knopfes (3) einschaltet;
- wenn der Fahrer den Motor anhalten will, er erneut auf den Knopf (3) drückt und die Zentraleinheit (4) zur Steuerung der Fahrgastzelle das Relais (5) zur Steuerung der Stromversorgung ausschaltet, wenn die Fahrzeuggeschwindigkeit geringer als ein vorbestimmter Grenzwert (Vₛ) ist;
- ein erneutes Drücken des Knopfes (3) ohne Entfernen der Karte (1) die Anlasssequenz erneut startet.

10. Verfahren zum unterstützten Anlassen gemäß Anspruch 9, **dadurch gekennzeichnet, dass** im Falle des Abwürgen des Motors die Motorsteuereinheit (6) die Information "abgewürgter Motor" der Zentraleinheit (4) zur Steuerung der Fahrgastzelle übermittelt, welche die sekundäre Leuchtanzeige (31) des Druckknopfes (3) ausschaltet und die Anzeige (30) zur Einladung zum Anlassen einschaltet, wenn die erforderlichen Sicherheitsbedingungen erfüllt sind, und **dadurch**, dass der Fahrer ohne Entfernen seiner Karte (1) erneut auf den Knopf (3) drückt, um den Motor des Fahrzeuges neu zu starten.

11. Verfahren zum unterstützten Anlassen gemäß einem der Ansprüche 9 oder 10, **dadurch gekennzeichnet, dass** jedes Entfernen der Karte (1) aus der Umgebung des Lesegerätes (2), wenn der Fahrzeugmotor angehalten ist, die Autorisation zum Anlassen des Motors annulliert.

12. Verfahren zum unterstützten Anlassen gemäß einem der Ansprüche 9 oder 10, **dadurch gekennzeichnet, dass** jegliches Entfernen der Karte (1) aus der Umgebung des Lesegerätes (2), während der Motor selbständig läuft, ohne Wirkung auf die Funktionsweise des Motors ist.

13. Verfahren zum unterstützten Anlassen gemäß einem der Ansprüche 9 oder 10, **dadurch gekennzeichnet, dass** in demjenigen Fall, wo die Karte (1) des Fahrers in das Lesegerät (2) eingeführt werden muss, um erkannt zu werden, die Karte im Lesegerät blockiert wird, sobald der Motor läuft, und unter der Bedingung befreit wird, dass der Motor angehalten ist und dass die Fahrzeuggeschwindigkeit geringer als ein Grenzwert ist, wobei die Blockierung und Befreiung der Karte durch die Zentraleinheit (4) zur Steuerung der Fahrgastzelle gesteuert wird und durch das Lesegerät (2) durchgeführt wird.

14. Verfahren zum unterstützten Anlassen gemäß Anspruch 13, **dadurch gekennzeichnet, dass** es zusätzlich ein akustisches Warnmittel umfasst, welches dem Fahrer anzeigt, dass die Karte (1) im Lesegerät (2) verblieben ist, während er sein Fahrzeug verlässt.

15. Verfahren zum unterstützten Anlassen gemäß einem der Ansprüche 9 oder 10, **dadurch gekennzeichnet, dass** die Zentraleinheit (4) zur Steuerung der Fahrgastzelle eine Funktion zur Speicherung der durch ein Drücken des Fahrers auf den Druckknopf (3) durchgeführten Anlassanfrage aufweist, wobei diese Speicherung einerseits nach einer festgelegten Zeit annulliert wird, wenn die erforderlichen, impulsartigen Sicherheitsbedingungen nicht erfüllt sind, aber andererseits beim zweiten erneuten Drücken des Knopfes beibehalten wird.

16. Verfahren zum unterstützten Anlassen gemäß einem der Ansprüche 9 bis 15, **dadurch gekennzeichnet, dass**, wobei das Fahrzeug mit einer elektromagnetischen Einrichtung zur Blockierung der Lenksäule ausgerüstet ist, die Zentraleinheit (4) zur Steuerung der Fahrgastzelle deren Entriegelung nach der Authentifizierung der Karte (1) zur Identifizierung des Fahrers befiehlt und deren Verriegelung befiehlt, wenn der Kartenleser (2) die Abwesenheit der Karte feststellt, wobei der Motor angehalten ist.

## Claims

1. An assisted starting system for a vehicle whose engine is piloted by a control unit, connected to a starter and a vehicle speed sensor, the system comprising:
- a badge (1) worn by the vehicle driver and containing an encoded identification function authorising starting;
- a badge reader (2) adapted to identify the badge (1);
- sensors (15) detecting the safety conditions required for starting;
- a sensor (16) of vehicle speed information;
**characterised in that** the system further comprises:
- a push button (3) for starting and stopping the engine, which can be directly accessed by the driver;
- a central control unit (4) of the passenger space, connected to both the badge reader (2) and the push button (3) and also ensuring the distribution of the electrical supply by means of a relay (5), after contact with the engine control unit (6) in particular, and a relay (13) controlling the starter (14) of the engine which receives information on the state of the engine, whether stationary or running, via the engine control unit (6);
and **in that**, when the driver depresses the button (3) to stop the engine (stage o), the passenger space control unit (4) compares the vehicle speed (V) supplied by the speed sensor or an anti-lock braking system (ABS) with a predetermined threshold (Vₛ) (stage q) and if the speed (V) is greater than the threshold, the depression of the button has no effect and the engine continues to run.

2. An assisted starting system as claimed in claim 1, **characterised in that** the push button (3) is supplied by the electrical voltage of the vehicle battery (20) and is equipped with two indicator lights:
- a first indicator light (30) which is an invitation to the driver to start, indicating the position of the button and informing him that he is authorised to start the engine as the required safety conditions have been satisfied;
- a second indicator light (31) which is lit when the engine is running and informs the driver of the location of the button adapted to stop the engine.

3. An assisted starting system as claimed in one of claims 1 or 2, **characterised in that** the identification badge (1) of the driver authorised to start the engine contains encoded means for authorising starting of the encrypted transponder type.

4. An assisted starting system as claimed in one of claims 1 to 3, **characterised in that** the badge reader (2) is disposed on the vehicle dashboard, is supplied by the electrical voltage of the battery (20) and contains the equivalent of the transponder aerial, with contact-free reading of the identifier.

5. An assisted starting system as claimed in one of claims 1 to 4, **characterised in that** the central control unit (4) of the passenger space is also connected to a service relay (7) for the electrical supply of the radio (8), the window controls (9), the motor fan unit (10) of the passenger space and the electric seat (11).

6. An assisted starting system as claimed in one of claims 1 to 5, **characterised in that** when the vehicle is equipped with an electric anti-theft device, it is controlled by the central control unit (4) of the passenger space by means of the service relay (7).

7. An assisted starting system as claimed in one of claims 1 to 6, **characterised in that** the sensors (15) detecting whether the safety conditions required for starting are satisfied, are in particular position sensors of the gearbox lever, the clutch pedal, the parking brake, a sensor on the steering column and a preheating sensor in the case of a diesel engine.

8. An assisted starting system as claimed in one of claims 1 to 7, **characterised in that** the sensor (16) supplying information on the speed of travel of the vehicle is integrated in the anti-lock braking system (ABS) when the vehicle is equipped with such a system.

9. A method of operation of an assisted starting system of a vehicle as claimed in one of claims 1 to 8, **characterised in that**:
- after detection of the badge (1) worn by the driver, the starting of the engine is authorised if the identifier encoded in the badge is authenticated and if the required safety conditions supplied by the sensors (15) are satisfied, the indicator light (30) inviting the driver to depress the push button (3) then being lit;
- if the driver presses the button (3), the central control unit (4) of the passenger space actuates the control relay (13) of the starter (14) until the engine control unit (6) provides it with information that the engine is running independently which lights the "engine running" indicator light (31) of the button (3);
- when the driver wishes to stop the engine, he again presses the button (3) and the central control unit (4) of the passenger space cuts off the electrical supply control relay if the vehicle speed is below a predetermined threshold Vₛ);
- when the button (3) is again depressed without removal of the card (1), the starting sequence is launched again.

10. A method of assisted starting as claimed in claim 9, **characterised in that**, if the engine stalls, the engine control unit (6) supplies the information "engine stalled" to the central control unit (4) of the passenger space which extinguishes the secondary indicator light (31) of the push button (3) and lights the indicator light (30) inviting the driver to start if the required safety conditions are satisfied, and **in that** the driver, without removing his badge (1), presses the button (3) again in order to restart the vehicle engine.

11. A method of assisted starting as claimed in one of claims 9 or 10, **characterised in that** any removal of the badge (1) from the environment of the reader (2), when the vehicle engine is stationary, cancels out the authorisation to start the engine.

12. A method of assisted starting as claimed in any one of claims 9 or 10, **characterised in that** any removal of the badge (1) from the environment of the reader (2), when the engine is running independently, has no effect on the operation of the engine.

13. A method of assisted starting as claimed in one of claims 9 or 10, **characterised in that** if the driver's badge (1) has to be inserted into the reader (2) to be detected, the badge is locked in the reader as soon as the engine is running and is unlocked provided that the engine has stopped and the vehicle speed is below a threshold, the locking and unlocking of the card badge being controlled by the central control unit (4) of the passenger space and executed by the reader (2).

14. A method of assisted starting as claimed in claim 13, **characterised in that** it further comprises an acoustic warning means informing the driver that the badge (1) is still in the reader (2) when he is leaving the vehicle.

15. A method of assisted starting as claimed in one of claims 9 or 10, **characterised in that** the central control unit (4) of the passenger space has a memory function in respect of the start request made by the driver by pressing the push button (3), which memory is cancelled out after a fixed time if the required push-button safety conditions are not satisfied, but is maintained in the case of a second further depression of the button.

16. A method of assisted starting as claimed in one of claims 9 to 15, **characterised in that** when the vehicle is equipped with an electromagnetic device for locking the steering column, the central control unit (4) of the passenger space controls its unlocking after authentication of the driver's identification badge (1) and controls its locking when the badger reader (2) detects the absence of the badge, the engine being stationary.
